# EUROPÄISCHE PATENTANMELDUNG

(11) **EP 1 650 686 A2**
(43) Veröffentlichungstag der Anmeldung: **26.04.2006**
(21) Anmeldenummer: 05108352.5
(22) Anmeldetag: 12.09.2005
(51) Int. Cl.: G06F 17/50

(54) **Verfahren und Vorrichtung zur Simulation von nichtlinearen Abhängigkeiten zwischen physikalischen Entitäten und über Sensoren gemessene Einflussfaktoren auf der Basis eines Mikro-Simulationsansatzes mittels in Objekten eingebetteten probabilistischen Netzen**

(30) Priorität: 17.09.2004 DE 102004045610; 15.10.2004 DE 102004050505
(71) Anmelder: Dacos Software GmbH, 66123 Saarbrücken (DE)
(72) Erfinder: Schwaiger, Arndt, 66111, Saarbrücken (DE); Stahmer, Björn, 66123, Saarbrücken (DE); Ruß, Christian, 66806, Ensdorf (DE)
(74) Vertreter: Patentanwälte Kewitz & Kollegen

(57) **Zusammenfassung**

Die Erfindung betrifft ein Verfahren das zur Modellierung und Simulation von technischen Entitäten, deren Interdependenzen (1), sowie eines daraus emergierenden Systemverhaltens genutzt werden kann, um Aussagen über das reale Verhalten zu treffen, umfassend die folgenden Schritte:
die realen Entitäten werden jeweils durch ein individuelles Software-Objekt repräsentiert, das das individuelle Verhalten der entsprechenden Entität speichert. Dabei wird das individuelle Verhalten mittels maschineller Lernverfahren aus realen Daten über die Entität und seine Umwelt extrahiert, um dann das individuelle Verhalten innerhalb des Software-Objektes mittels einer Menge von probabilistischen Netzen (PN) zu speichern. Dabei modelliert ein PN je ein Teilverhalten der Entität als quantifizierte lineare oder nicht-lineare Abhängigkeiten zwischen einer Menge von Einflussfaktoren und Verhaltensaspekten. Die Einflussfaktoren und Verhaltensaspekte sind durch entsprechende Knoten in den PN repräsentiert. Die globalen Interdependenzen zwischen den Entitäten werden aus realen Daten extrahiert und als lineare oder nicht-lineare Abhängigkeiten zwischen den Entitäten in Meta-PN gespeichert. Die Meta-PN werden durch Verschmelzen von lokalen PN und dem Hinzufügen von extrahierten globalen Interdependenzen generiert.

## Beschreibung

### TECHNISCHES FELD

Das Patent betrifft die computerunterstützte Simulation und Systemsteuerung. Es beinhaltet ein Verfahren für die skalierbare Modellierung, Analyse, Simulation und Prognose des Verhaltens von einzelnen physikalischen Entitäten (MikroSimulation) sowie des aus deren interdependentem Zusammenwirken emergierenden systemischen Gesamtverhaltens einer Menge von Entitäten. Diese Informationen können zu Steuerungszwecken (zur direkten Anpassung der Ressourcenversorgung an das Systemverhalten oder zur indirekten Anpassung des Systemverhaltens an Ressourcenverfügbarkeit) benutzt werden.

Dabei werden Verhaltensmuster und Verhaltensinterdependenzen der Entitäten durch probabilistische Netze repräsentiert, deren Struktur das Wissen über das Verhalten von und Interdependenzen zwischen dem Verhalten von Entitäten codiert. Dabei können Entitäten beliebiger Art zusammenwirken. Die Verhaltensmuster werden aus kontinuierlich gemessenen Daten (z.B. Sensordaten, Mobilfunkdaten etc.) oder aus gespeicherten zeitlich zurückliegenden Daten extrahiert. Dazu wird eine Speichervorrichtung benötigt.

Zusätzlich beinhaltet das Patent eine objekt-orientierte Software-Architektur, die das o. g. Simulationsverfahren realisiert. Die Software-Architektur beinhaltet sowohl eine Architektur für eine Simulationsumgebung als auch eine Architektur für in Software-Objekte eingebettete probabilistische Netze.

### HINTERGRUND DER ERFINDUNG

Simulationsverfahren und -architektur können dazu verwendet werden, um das Gesamtverhalten eines aus Entitäten konstituierten Systems in Abhängigkeit von den auf die einzelnen Entitäten wirkenden Einflüssen oder Effekten (z.B. Datum, Wochentag, Uhrzeit, Wetter etc.) zu simulieren und prognostizieren, um dann entweder
- die Bereitstellung von Ressourcen an das prognostizierte Verhalten der Entitäten und des Gesamtsystems über die Steuerung von physikalischen Einrichtungen direkt proaktiv anzupassen (Anwendungsfall 1) oder
- das Verhalten der Entitäten eines Systems indirekt an die prognostizierte Verfügbarkeit von Ressourcen proaktiv anzupassen. Mit Hilfe der beschriebenen Technologie wird hierzu zunächst analysiert und simulativ getestet, welchen Einflüssen das System ausgesetzt werden muss, um eine Anpassung seines Verhaltens an die Ressourcenverfügbarkeit zu erzielen und diese Einflüsse anschließend über die Steuerung von physikalischen Einrichtungen Effekte zu induzieren

### (Anwendungsfall 2).

Die Aktionen und Reaktionen von physikalischen Entitäten der realen Welt (wie z.B. menschlichen und tierischen Individuen, Maschinen (z.B. Autos und Verkehrsmittel etc.) werden durch physikalische Größen (Einfluss-/Umweltfaktoren) beeinflusst, die von den genannten Entitäten über Sensoren wahrgenommen werden können. Dies gilt ebenso für die Aktionen und Reaktionen von nicht-physikalischen Entitäten (Software-Objekte, Software-Agenten, Softbots, etc.).

Diese wahrgenommenen Umweltfaktoren ergeben sich aus von anderen Entitäten autonom gesteuerten Aktionen sowie durch von den Entitäten unsteuerbare, stochastische Veränderungen der Umwelt (z.B. Temperatur, Luftfeuchtigkeit etc.). In Abhängigkeit von der Art bzw. der Kombination der von einer Entität wahrgenommenen Umweltfaktoren ergibt sich das individuelle Verhalten bzw. die Menge und Art der ausgeführten Aktionen dieser Entität. Einige oder alle Aktionen einer Entität können dabei für andere Entitäten zu Umweltfaktoren werden, die wiederum deren Verhalten beeinflussen u.s.w., so dass diese Entitäten ein System bilden, in dem ein interdependentes systemisches Gesamtverhalten emergiert.

Es gibt mannigfaltige Systeme des täglichen Lebens, auf die eine Charakterisierung obiger Art zutrifft, z.B. in den Bereichen "Verkehrssysteme" und "Funknetzwerke".

Aufgrund ihrer Relevanz wurden in den letzten Jahren verstärkt Anstrengungen unternommen, um das von einer Menge von Einflussfaktoren abhängige Gesamtverhalten dieser Systeme besser verstehen und prognostizieren zu können. Zum einen mit dem Ziel, unerwünschte Systemzustände wie Verkehrsstaus oder Funknetzüberlastungen schneller und genauer prognostizieren und ihnen über Steuerungsmechanismen proaktiv entgegenwirken zu können. Aber zum Anderen auch mit dem Ziel, so viel an Wissen über das Verhalten des Gesamtsystems sowie seiner Entitäten durch die Extraktion zugrunde liegender Verhaltensmuster und Verhaltensinterdependenzen zu gewinnen, dass man unerwünschten Reaktionen von Entitäten entgegensteuern kann. Um damit dann letztendlich die aus Individualreaktionen emergierenden unerwünschten Entwicklungen eines Gesamtsystems zu vermeiden und stattdessen durch die geeignete Veränderung von Einflussfaktoren über die Steuerung von physikalischen Einrichtungen erwünschtes Systemverhalten hervorrufen zu können.

Bisherige Verfahren für die Modellierung, Simulation, Analyse sowie Prognose und Steuerung des Gesamtverhaltens sowie auch der Ressourcenversorgung solcher Systeme haben allesamt eine Reihe von Nachteilen, die durch ihren eingeschränkten Ansatz bedingt sind und sich auf ihre Anwendbarkeit und Leistungsfähigkeit auswirken.

Insbesondere besitzen sie den Nachteil, dass sie keinen Mikro-Simulationsansatz verfolgen. Bei einem Mikro-Simulationsansatz können in einem Simulationssystem Entitäten derart modelliert werden, dass im Simulationsprozess sowohl das individuelle Verhalten aller Entitäten als auch das aus ihrem Zusammenwirken emergierende Gesamtverhalten des Systems berücksichtigt wird. Das individuelle Verhalten einer Entität mit seiner Interdependenz zu anderen Entitäten und Einflussfaktoren, d. h. seine nichtlinearen Einflüsse auf das Systemverhalten, werden also im Simulationsprozess berücksichtigt.

Bei den bisher bekannten Verfahren wird aber kein solcher Ansatz verfolgt. Oftmals werden stattdessen Daten über das Verhalten einzelner Entitäten aggregiert und mit statistischen Methoden "verdichtet", so dass das individuelle Verhalten einer Entität mit seiner Interdependenz zu anderen Entitäten und Einflussfaktoren unberücksichtigt bleibt. Entweder geht dabei Wissen über das Verhalten der einzelnen Entität verloren oder Wissen über seine nichtlinearen Einflüsse auf andere Entitäten im Simulationsprozess oder sogar beides. unberücksichtigt.

Daraus resultiert, dass Simulations- und Prognosegüte solcher "Nicht-Mikro-Simulationssysteme" leiden, weiterhin, dass Anfragen an das System, die nur aufgrund von Wissen über das individuelle Verhalten der Entitäten beantwortbar sind, nicht gestellt werden können, weiterhin, dass Analysen über Interdependenzen zwischen Entitäten, die oftmals der Grund für unerwartete Systemeffekte darstellen, nicht durchführbar sind und daher, dass "Nicht-Mikro-Simulationssysteme" nur unzureichend dazu in der Lage sind, vorherzusagen, welche Einflüsse auf ein komplexes System wirken müssen, um es in eine gewünschte Entwicklungsrichtung zu steuern.

Je komplexer die Interaktionen in einem System und je intelligenter und autonomer seine Entitäten sind, umso schwieriger ist die Prognose der Veränderungen des Gesamtverhaltens des Systems. Denn i.d.R. wird sein Gesamtverhalten mit steigender Komplexität durch Entwicklungen bestimmt, die auf nichtlinearen Einflüssen und Interdependenzen zwischen seinen Entitäten und den Umwelteinflüssen beruhen.

### ÜBERSICHT ÜBER DIE ERFINDUNG

Ziel der Erfindung ist daher, auf der Basis eines probabilistischen Mikro-Simulationsansatzes ein Simulationsverfahren und eine dieses einbettende Architektur zu realisieren, mit denen komplexe Systeme so modelliert werden können, dass im Simulationsprozess sowohl das individuelle Verhalten jeder Entität mit seinen nichtlinearen Abhängigkeiten von beliebigen Einflussfaktoren als auch die nichtlinearen Interdependenzen zwischen den Entitäten mit ihren Einflüssen auf das Gesamtsystemverhalten im Simulationsprozess Berücksichtigung finden können.

Und zwar derart, dass das emergierende Gesamtverhalten eines Systems mittels der Erfindung auf qualitativ neuartige Art und Weise simuliert, prognostiziert und analysiert werden kann, um die dadurch abgeleiteten Erkenntnisse entweder zu nutzen, um
- direkt über die Steuerung von physikalischen Einrichtungen die Ressourcenversorgung proaktiv an das prognostizierte Verhalten der Entitäten bzw. des Systems anzupassen (Anwendungsfall 1) oder
- über die Steuerung von physikalischen Einrichtungen reale Einflüsse auf das System und seine Entitäten, die in der virtuellen Simulation auf das Systemverhalten gewünschte Effekte hatten und auf diese Weise den Ressourcenverbrauch im System indirekt zu steuern (Anwendungsfall 2).
   Damit realisiert die Erfindung ein Verfahren, welches bei der skalierbaren Modellierung, Simulation, Analyse, Prognose und Steuerung des Verhaltens von einzelnen Entitäten der realen Welt sowie des aus deren interdependentem Zusammenwirken emergierenden systemischen Gesamtverhaltens einer Menge von Entitäten genutzt werden kann.
   Dabei werden Verhaltensmuster und Verhaltensinterdependenzen der Entitäten durch probabilistische Netze repräsentiert, deren Struktur das Wissen über das Verhalten von und Interdependenzen zwischen dem Verhalten von Entitäten codiert. Hierbei können Entitäten beliebiger Art zusammenwirken.
   Entitäten werden im System als individuelle Software-Objekte repräsentiert. In den Objekten werden Mengen von probabilistischen Netzen (PN) eingebettet, die das individuelle Verhalten der Entität modellieren. Die PN modellieren jeweils ein Teilverhalten der Entität.
   Quantifizierte nicht-lineare Abhängigkeiten zwischen einer Menge von Einflussfaktoren (Inputknoten) und Verhaltensknoten (Outputknoten) werden durch maschinelle Lernverfahren aus realen Daten extrahiert. Diese Abhängigkeiten werden durch bedingte Wahrscheinlichkeiten in den Netzen repräsentiert.
   Zusätzlich zu dem lokalen Wissen, das in den PN gespeichert ist, werden auch die globalen Interdependenzen zwischen den Entitäten modelliert und in PN repräsentiert. Die Interdependenzen können sowohl in den Entitäten als auch in übergeordneten Einheiten gespeichert und generiert werden. Durch Zusammenschluss der lokalen PN zu Meta-PN - mittels eines selbst entwickelten Verschmelzungsverfahrens (für PN) ― werden globale Interdependenzen modelliert. Das Verschmelzungsverfahren beinhaltet sowohl das Verschmelzen der lokalen PNs zu einem Meta-PN als auch das Erkennen von globalen Interdependenzen. Übergeordnete Einheiten repräsentieren eine Menge von Entitäten.
   Mittels der in den Objekten gespeicherten PN können beliebige Szenarien simuliert werden. Ein Szenario besteht aus Kombinationen von konkreten Zuständen von Entitäten und/oder Einflussfaktoren eines Systems. Diese Kombinationen werden als Sequenz von Netzkonfigurationen an die Netze übergeben. Die Auswirkung jeder Konfiguration wird mittels Anwendung von Inferenzalgorithmen für PN ermittelt. Zur Simulation von globalen Interdependenzen werden die Meta-PN analog zu lokalen PN verwendet.

### KURZE BESCHREIBUNG DER FIGUREN

- Fig. 1: zeigt zwei Software-Objekte mit probabilistischen Netzwerken, die in ein holonisches Softwareobjekt verschmolzen werden sollen;
- Fig. 2: zeigt das Verschmelzen von probabilistischen Netzwerken;
- Fig. 3: zeigt abgeleitete Abhängigkeiten;
- Fig. 4: zeigt eine MDL-Bewertungsfunktion;

- Fig. 5: zeigt die Berechnung einer logarithmischen Wahrscheinlichkeit von möglichen Paaren;
- Fig. 6: zeigt eine Funktion zum Erlernen der Wahrscheinlichkeiten eines Ereignisses;
- Fig. 7: zeigt einen Algorithmus zum Lernen der Abhängigkeiten von Holonen;
- Fig. 8: zeigt einen Algorithmus zum Finden maximaler gleicher Netze;
- Fig. 9: zeigt einen Algorithmus zum Finden von gleichen Kinderknoten, die von Elternknoten ausgehen;

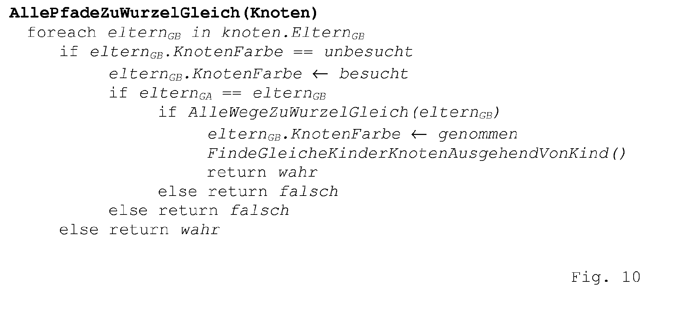

- Fig. 10: zeigt einen Algorithmus zum Finden aller Pfade zu gleichen Knoten.

### BESCHREIBUNG DER BEVORZUGTEN AUSFÜHRUNGSFORMEN

Eine einfache Herangehensweise, um das Gesamtverhalten eines aus Entitäten bestehenden Systems zu simulieren und zu prognostizieren, wäre, aus den Daten über das System und seiner Entitäten zu lernen und ein riesiges probabilistisches Netz (Makronetz) zu generieren, in dem sowohl die Entitäten als auch alle Einflussfaktoren als Knoten repräsentiert sind und in dem alle Abhängigkeiten zwischen den Knoten als bedingte Wahrscheinlichkeitstabellen (CPT) enthalten sind. Resultieren würde ein Netz mit Hunderttausenden von Knoten, welches in seiner Komplexität nicht handhabbar ist. Um dennoch eine Simulation und Prognose des globalen Verhaltens in solchen Systemen durchführen zu können, wird das erfindungsgemäße Verfahren verwendet.

Mit der Absicht, einen umfassenden Schutz zu erlangen wird im Folgenden ein Gesamtprozess beschrieben, der in einer möglichen Ausführungsform aus einem oder mehreren der folgenden Schritte besteht:
- Messung/Gewinnung von Rohdaten bzw. Informationen über reale Entitäten.
- Identifikation der zur Simulation relevanten Objekte bzw. Relationen.
- Mikrosimulation durch Partitionierung eines möglichen Makronetzes -> Repräsentation aller Entitäten durch individuelle Softwareobjekte (siehe Methode A).
- Automatisches Erlernen der individuellen Verhaltensmuster bzw. Relationen aller Entitäten anhand ihrer Realdaten.
- Speicherung der erlernten Erkenntnisse als probabilistische Netze (PN) bzw. Verhaltensnetze innerhalb der Softwareobjekte (siehe Methode A).
- In einem Softwareobjekt können mehrere Mikro- oder Makro-PNs gespeichert werden. Dies nicht alles in einem PN zu speichern reduziert einerseits Komplexität, andererseits kann es der Prognosegenauigkeit dienen (siehe im Folgenden Methode A).
- Relationen zwischen Entitäten werden dabei durch Meta-Netze (MN) modelliert, die durch Verschmelzen von individuellen PN entstehen und in Gruppen- bzw. Meta-Objekten gekapselt werden (siehe im Folgenden Methode B).
- Im Simulationsprozess erfolgt eine Generierung/Definition eines oder mehrerer zu simulierender Szenarien durch Erstellen spezieller Szenario-Objekte mit Szenario-Parametern (Einflussfaktor-Werte). An dieser Stelle werden der Simulationsprozess bzw. die Softwareobjekte in ihm auf geeignete Weise mit Einflussfaktor-Werten initialisiert (siehe im Folgenden Methode C).
- Selektion der in Abhängigkeit von den Parametereinstellungen in den Szenario-Objekten für die Simulation notwendigen Softwareobjekte. Die nur absolut notwendige Objekt-Teilmenge (zusammengesetzt sowohl aus einzelnen "Mikro-Objekten" als auch Gruppen von Objekten repräsentierenden "Makro-Objekten" auszuwählen, vermindert die Komplexität der Simulation. Zur Auswahl der Objektmenge wird eine Art "Vorsimulation" durchgeführt; erst danach erfolgt die Hauptsimulation (siehe im Folgenden Methode C).
- Festlegung einer Sequenz bzw. Reihenfolge oder Ordnung, in denen die selektierten Objekte nach ihren Reaktionen auf die Parameter in den Szenario-Objekten - d.h. auf Veränderungen der Einfluss- bzw. Umweltfaktoren - in der Hauptsimulation "gefragt" werden bzw. reagieren. Dies dient ebenfalls der Komplexitätsreduktion und hierbei müssen auch Korrelationen zwischen den Softwareobjekten beachtet werden (siehe im Folgenden Methode C).
- In der oben festgelegten Reihenfolge werden die PN (Probabilistischen Netze) der selektierten Softwareobjekte entsprechend den Szenario-Parametern konfiguriert. Dadurch entsteht eine Sequenz von PN-Konfigurationen (siehe Methode C). Für die Berechnungen werden auf die Anwendung bezogene, spezialisierte PN-Netztopologien verwendet (siehe Methode D).
- Durch die implementierten Inferenzmechanismen für PNs werden aus den PN-Konfigurationen in der oben bestimmten Sequenz für bestimmte Knoten in den PNs Erwartungswerte berechnet, die individuelle Reaktionen der Softwareobjekte auf die definierten Szenario-Parameter darstellen (siehe im Folgenden Methode C).
- Abschließend erfolgt eine Bewertung der Szenarien anhand ausgewählter simulierter Zielvariablen. Hieraus ergibt sich eine geeignete Steuerung von physikalischen Einrichtungen
   a. im Anwendungsfall 1 zur proaktiven Anpassung der Ressourcenversorgung an das im Szenario mit der höchsten Realisierungswahrscheinlichkeit prognostizierte Verhalten der Entitäten gemäß der vom verfahren generierten Erwartungswerte oder
   b. im Anwendungsfall 2 zur Induzierung der im bestbewerteten Szenario gesetzten Szenario-Parameter.

Zur Verbesserung der Simulationsergebnisse können verschiedene Softwareobjekte miteinander interagieren, um Informationen auszutauschen und gegenseitige Beeinflussungen zu simulieren.

Als mögliches Anwendungsbeispiel kann ein Telekommunikationsfunknetzwerk (Anwendungsfall 1) gewählt werden.

Simulationsverfahren und -architektur, die in dieser Anmeldung beschrieben sind, können genutzt werden, um in einem Telekommunikationsfunknetzwerk ein sog. ,,Load Balancing" zu betreiben. Ein Funknetzwerk (z.B. ein GSM-Mobilfunknetz) ist aus k Zell-Clustern aufgebaut, welche jeweils aus n Zellen bestehen, die über Sende-/Empfangsfunkstationen (in GSM-Netzen Based Transceiver Stations [BTS] genannt) mit Funkkanälen versorgt werden. Innerhalb jedes Zell-Clusters müssen die k innerhalb des Funknetzwerks nutzbaren Kanäle so auf die n Zellen verteilt bzw. partitioniert werden, dass kein Kanal innerhalb des Zell-Clusters doppelt genutzt wird (sog. FDMA-Verfahren, [frequency division multiple access]). Damit sind Überlagerungen gleicher Frequenzen mit anderen Signalen von Zellen im Cluster ausgeschlossen. Anstatt die Kanäle wie üblich im Verhältnis k:n statisch auf die n Zellen eines Clusters zu verteilen, kann mit der zu erfindungsgemäßen Technologie die Aufteilung der verfügbaren Kanäle auf die einzelnen Zellen dynamisch optimal an die pro Zeitintervall prognostizierte Netzbelastung pro-aktiv angepasst werden. Dies geschieht, indem zunächst für die n Zellen des Clusters Verhaltensnetze (Zellnetze) generiert bzw. erlernt werden (Methode A), die das Funkverhalten der Netznutzer innerhalb jeder Zelle Cluster in Abhängigkeit von Einflüssen (z.B. Datum, Wochentag, Uhrzeit, Wetter etc.) repräsentieren. Auf der Basis dieser Zellnetze kann dann vom Verfahren die in Abhängigkeit von den angenommenen wirkenden Einflüssen zu erwartende Ressourcennachfrage pro Zeitintervall simuliert und prognostiziert werden (Methoden C und D). Anschließend kann dann die Partitionierung der verfügbaren k Kanäle auf die n Zellen über einen Steuerungsrechner dynamisch und pro-aktiv an die prognostizierte Nutzungslast angepasst werden. Zu Analysezwecken kann die Untersuchungsgrundlage sogar noch weiter detailliert werden, indem auch für die einzelnen Nutzer des Funknetzes Verhaltensnetze generiert werden. Dies ist möglich, da diese i.d.R. über das verwendete Kommunikationsgerät (z.B. die SIM-Karte in ihrem GSM-Mobiltelefon) identifizierbar sind.

Um die Partitionierung der Kanäle auf die Zellen zu optimieren, ist es darüber hinaus oft nötig, mehrere Zellnetze zu einem übergeordneten Zell-Meta-Netz zu verschmelzen (Methode B). Dies kann u. a. erforderlich sein, wenn die Zellen innerhalb eines Clusters nicht alle von einer einzigen Sende- und Empfangsfunkstation (in GSM-Netzen Based Transceiver Station [BTS] genannt) versorgt werden können. In diesem Fall ist für die Optimierung der Zuordnung von Ressourcen im Funknetz nicht nur das Nutzungsverhalten innerhalb einer einzelnen Zelle relevant, sondern innerhalb der von einer Sende- und Empfangsfunkstation versorgten Menge von Zellen. Deren Netze werden hierzu zu übergeordneten Stations-Netzen verschmolzen, die wiederum zu Cluster-Netzen verschmolzen werden können. Dies ist u.a. für die Koordination von sog. Hand-overs relevant, wenn ein Funknutzer den Sendebereich einer Zelle oder einer Station verlässt und in einen anderen Sendebereich wechselt. Für den Zell-Clustern übergeordnete Kontrollstationen (in GSM-Netzen Base Station Controller [BSC] genannt), die die Sende- und Empfangsressourcen für eine Vielzahl an Zellen und Clustern überwachen und koordinieren, sind für die Beantwortung übergeordneter Fragestellungen (mittels Methoden C und D) weitere Verschmelzungen vorteilhaft.

Ein weiteres Anwendungsbeispiel ist ein elektronisches Verkehrsleitsystem (Anwendungsfall 2).

Mit dem in dieser Anmeldung beschriebenen System und Verfahren lassen sich Verkehrsleitsysteme steuern. Simulationsverfahren und -architektur können genutzt werden, um erstens auf der Basis von Prognosen über das Verhalten einzelner Verkehrsteilnehmer das Verhalten eines Verkehrssystems mit kritischen Entwicklungen wie Staus und zunehmender Unfallhäufigkeit vorherzusagen, zweitens zu analysieren und simulativ zu testen, welche Einflüsse vorgenommen werden müssen, um die prognostizierte unerwünschte Entwicklung zu vermeiden und drittens über eine Veränderung der Steuerung von Ampelanlagen/Verkehrsleitsystemen die hierfür benötigten technisch-physikalischen Effekte zu bewirken.

Über Messgeräte bzw. Sensoren an Brücken oder an Straßen und Autobahnen werden bereits heute sehr viele Daten über den Zustand des Verkehrs erfasst (s. z.B. LKW-Maut). Gleiches gilt für die Sensor-Datenerfassung in Fahrzeugen (KFZ, LKW etc.), die - z.B. per GSM - Daten über ihre Geschwindigkeit, etc. an eine Leitstelle geben können.

Bei der Verkehrssimulation werden solche Daten für das Erzeugen von PN genutzt und in Software-Objekten gespeichert (Methode A), die exakt eine physikalische Einheit (Fahrzeug, Straßenabschnitt etc.) repräsentieren. Die PN erlernen dabei die Verhaltensmuster der Fahrzeuge sowie allgemeine Verkehrsmuster, die in Abhängigkeit von verschiedensten Einflussfaktoren auf bestimmten Streckenabschnitten auftreten.

In einem PN ist das Fahrverhalten beispielsweise eines Fahrzeugs unter der Bedingung der äußeren Umstände wie Wetter, Straßenbeschaffenheit und Verkehrslage kodiert und kann somit für Simulationen genutzt werden. Verhaltensmuster können dabei sogar individuell für einzelne Fahrzeuge erlernt werden, falls diese (wie z.B. bei der Maut) einen sie identifizierenden Mikroprozessor mit sich führen oder ihre Daten eigenständig an eine Verkehrsleitstelle senden, um im Gegenzug von dieser optimal "geleitet" zu werden.

Mittels Inferenzverfahren können die Fahrzeug-Objekte mittels ihrer PN in der Simulation (Methoden C und D) darüber Aufschluss geben, wie sich das Verhalten der korrespondierenden Fahrzeuge verändert, wenn man technische Effekte induziert, d.h. z.B. Stauwarnungen und Geschwindigkeitsempfehlungen direkt an die Fahrzeuge zurückgibt oder Ampeln und elektronische Verkehrszeichen mit bestimmten Konfigurationen von Warnhinweisen, Geschwindigkeitsbegrenzungen oder sogar Umfahrempfehlungen schaltet.

Die in der Realität autonomen Fahrzeuge werden über diese technischen Effekte in ihren autonomen Entscheidungen vom System "rückbeeinflusst"; ihre Reaktionen werden anschließend wiederum über die Sensoren erfasst, etc.

Die Ergebnisse der Simulationen dienen dazu, optimale Konfigurationen für die Anlagen von elektronischen Verkehrsleitsystemen zu finden, die den Verkehr optimal steuern. Simulationsergebnisse werden direkt in Steuersignale für die Regelanlagen übersetzt.

Bei der Simulation des Verkehrs und der Optimierung der Konfiguration der Regelanlagen eines elektronischen Verkehrsleitsystems wird darüber hinaus bei vielen Fragestellungen die Verschmelzungsmethode (Methode B) benötigt, z.B. um das Wirken von Straßenzustand und Verkehrsteilnehmern auf ein zu simulierendes Fahrzeug zu modellieren. Ein Softwareobjekt, das einen Straßenabschnitt repräsentiert, kann zudem mit anderen Straßenabschnittsobjekten verschmolzen werden, um den Verkehrsfluss von einem Abschnitt zum Nächsten zu simulieren.

Eine weitere Anwendung der Verschmelzungsmethode besteht hierbei darin, dass mit ihrer Hilfe die akkurate Simulation des Verhaltens von Gruppen von Fahrzeugen vereinfacht und teilweise erst möglich wird.

Zudem wird es mit ihrer Hilfe sogar möglich, neue prototypische Verhaltensmuster bei Simulationsläufen zu berücksichtigen, über die es keine vollständigen Daten bzw. nur ungenügende Realdaten gibt, da diese nur von Fahrzeugprototypen erfasst wurden.

So könnten die PN der Objekte beispielsweise anhand von Messungen bei Fahrzeug-Prototypen derart verändert werden, dass neue prototypische Verhaltensmuster eingefügt und in einer Simulation auf ihre Tauglichkeit getestet werden können. Und dies u.a., bevor Automobilhersteller die technischen Voraussetzungen hierfür in ihre Serienfahrzeuge integrieren.

Ein solches Verhaltensmuster könnte z.B. eine "Konvoifahrt" sein. Die Hersteller BMW und Daimler Chrysler entwickeln z.B. Fahrzeugprototypen, die sich auf einer Autobahn zu einem Konvoi formieren können, so dass Fahrzeuge, die ein gleiches Fahrziel haben, in der Gruppe mit festgelegtem Abstand zueinander und mit gleicher Geschwindigkeit computergesteuert fahren können.

Das anhand der oben genannten Anwendungsbeispiele veranschaulichte Verfahren gemäß der Patentansprüche kann auch auf andere technische Gebiete angewendet werden.

Im Folgenden wird auf die im Verfahren verwendeten Methoden eingegangen.

Methode A: Modellierung der physikalischen Entitäten: Hier wird die Komplexität Top-Down heruntergebrochen, indem das riesige - aus einer naiven Herangehensweise an das Simulationsproblem resultierende― Makro-Netz in Teilnetze partitioniert und zwar in so viele Teilnetze, wie es simulationsrelevante Entitäten gibt (z.B. Artikel und Kunden bei der Supermarkt-Simulation oder Automobile und Straßenmesspunkte bei der Verkehrssimulation). Das Makronetz wird also in Teilnetze (Mikronetze) partitioniert, welche für jede Entität in einem korrespondierenden Softwareobjekte gespeichert bzw. gekapselt werden. Dies wird Mikrosimulationsansatz genannt und hat den Vorteil, dass die Komplexität auf der Mikrostufe handhabbarer ist, da die Netze kleiner sind und Berechnung in den Netzen effizient und praktikabel möglich sind.

Das Problem bei der Generierung bzw. Extrahierung globaler Modelle aus dem Datenmaterial von komplexen Domänen mittels "Data Mining", ist, dass die resultierenden Modelle entweder nicht detailliert genug oder zu komplex sind, um damit zu arbeiten. Viele Modellierungsmethoden sind NP-hart, was es unmöglich macht, mit diesen globalen Modellen für die ganze Domäne zu generieren bzw. zu extrahieren.

In diesem Fall verwendet man probabilistische Objekte, wobei diese die typischen Verhaltensmuster einzelner Kunden sowie von Kundengruppen aus Konsumdaten erlernen und darauf folgend deren Verhalten in Abhängigkeit von Umweltveränderungen (Preisänderungen, etc.) prognostizieren. Der Kern der probabilistischen Objekte besteht aus so genannten Verhaltensnetzen ― spezialisierten Bayes'schen Netzen, die probabilistische Wissensstrukturen repräsentieren, die mittels ,,Data Mining"-Methoden aus Sensordaten extrahiert und erlernt werden, welche zur Verfügung stehen. Die probabilistischen Objekte können zur Simulation von "Was-wäre-wenn"-Szenarien verwendet werden.

Mit Hilfe eines Verfahrens zur Verschmelzung von Verhaltensnetzen kann das System globale Kohärenzen in die Modelle integrieren, ohne auf Details verzichten zu müssen. Weiter unten wird ein Algorithmus zur Fusionierung von Verhaltensnetzen dargestellt, bei dem sich globale Kohärenzen zwischen den probabilistischen Objekten als Ergebnis entwickeln.

Im Folgenden wird auf Bayes'sche Netze eingegangen.

Es wird angenommen, dass man einen Datensatz D hat, der Datensätze der (Welt)-Zustände (bzw. Fälle oder "Cases") C^{W}₁,...,C^{W}ₖ einer Welt W zum Zeitpunkt t enthält, die aus einer Menge von Werten bestehen, die einer Menge von Variablen X₁, ...,Xₙ, wobei X₁ ∈ R ist, zugewiesen sind.

Z.B. könnte der Datensatz bzw. Weltzustand Cᵢ die Beobachtungen (Sensorinput) eines Objekts, das zu einer Entität korrespondiert, bezüglich der Welt, in der es während eines bestimmten Zeitabschnitts [t, L] "existiert", darstellen. Jetzt möchte man ein Modell der Erfahrung des Objekts generieren, das es dem Objekt erlaubt, aus seiner Vergangenheit zu lernen.

Man könnte D mit einer vollständigen Wahrscheinlichkeitsverteilung P(X₁, ...,Xₙ) modellieren, die verwendet werden kann, um die Wahrscheinlichkeit eines bestimmten Zustandes C von D berechnen, wobei ein beliebiger spezifischer Wert v₁ der Variablen X₁ zugewiesen und ein beliebiger spezifischer Wert v₂ der Variablen X₂ zugewiesen wird u.s.w. Mit solch einer Verteilung ist das Objekt dazu in der Lage, die Erfolgswahrscheinlichkeit einer bestimmten Aktion bzw. Handlung in der Welt zu prognostizieren, die auf Erfahrungen der Vergangenheit basiert.

In den meisten Fällen ist diese Wahrscheinlichkeitsverteilung wegen ihrer Größe nicht handhabbar. Die Größe der Tabelle, die die Wahrscheinlichkeitsverteilung speichert, erhöht sich exponentiell mit der Zahl an Variablen und Werten. Folglich benutzt man Bayes'sche (BN) Netzwerke, um D oder genauer Wᵢ zu modellieren, das die Weltsicht des Objekts Aᵢ darstellt. Ein Bayes' sches Netz (oder Belief-Netz) ist ein gerichteter azyklischer Graph (DAG) G=(V, E), wobei jeder Knoten Vᵢ einer Variable Xᵢ∈ X₁,...,Xₙ entspricht, die eine finite Menge von sich gegenseitig ausschließenden Zuständen S₁,...,Sⱼ haben kann.

Eine Menge von gerichteten Kanten Eᵢ = (Vₓ,V_{y}) ∈ E₁...Eₙ verbindet die Menge der Knoten Vᵢ miteinander. Jeder Knoten ist zudem mit einer Wahrscheinlichkeitsverteilung P(Xᵢ| Πₓᵢ) verbunden, wobei Πₓᵢ die Menge der "Eltern"-Knoten von Xᵢ in G ist.

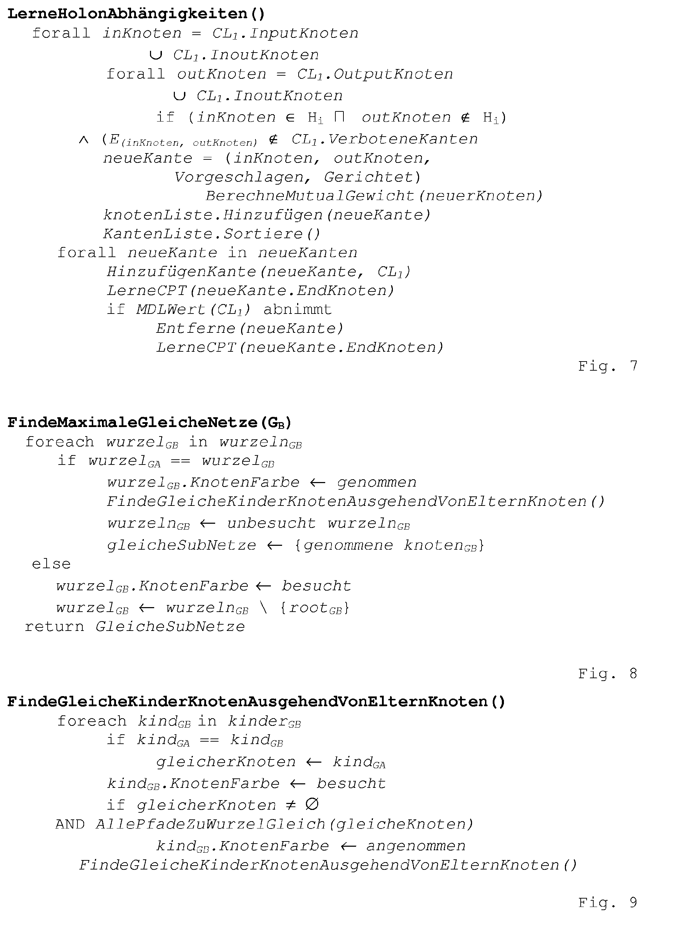

Formal ist ein BN bezüglich W ein Paar B = (G, PD), wo G der Graph und PD eine Menge von bedingten Wahrscheinlichkeitstabellen (CPT) ist. Bayes'sche Netze modellieren eine gemeinsame Wahrscheinlichkeitsverteilung (,,Joint Probability Distribution"), die über alle Variablen X₁, ..., Xₙ folgendermaßen wie in Figur 5 berechnet. Die prinzipielle Idee Bayes'scher Netze in Bezug auf allgemeine Wahrscheinlichkeitsverteilungen ist, nur abhängige bedingte Wahrscheinlichkeiten zu codieren und bedingtunabhängige Beziehungen zu eliminieren. Jede Variable Xᵢ mit gegebenen Eltern ist von ihren Nicht-Nachkommen unabhängig. Um die Aufgabe der Berechnung der Wahrscheinlichkeit jeden Wertes einer Variable wie oben beschrieben durchzuführen, liefert die Theorie der Bayes'schen Netze Methoden, neues Wissen abzuleiten. Bei der Verwendung einer herkömmlichen Wahrscheinlichkeitsverteilung würde hierzu ein Blick in eine Tabelle ausreichen. Im Fall eines Bayes'schen Netzes benötigt man hierzu jedoch einen Inferenzalgorithmus. Zusätzlich können BN mit unbekannten Fällen durch eine Verallgemeinerung bzw. Generalisierung von D umgehen. Jedoch ist der hierdurch erzielte geringe Speichervorteil mit höheren Berechnungskosten verbunden.

Um alle Bestandteile bzw. Entitäten einer komplexen Domäne zu modellieren, entwickelt man ein probabilistisches holonisches Multi-Objekt-System (PH-MOS). Das PH-MOS besteht aus einer Menge von Objekten Aᵢ = {A^{a}₁,...,A^{z}ₙ} mit unterschiedlichen Objektarten AT = *{a,* ..., *z},* einem Repository-Objekt *RA* und einer Menge von Objektumgebungen AE = *{AE*_{*1*}*,* ..., *AE*_{*1*}*}*. Die Objektumgebungen werden auf Computern in einem Computer-Netzwerk installiert und können Mengen von Objekten Aⱼ ⊆ Aᵢ verwalten. Die AE kann Objekte empfangen, neue Objekte starten und Objekte entfernen. Dieses ist notwendig, weil ein Objekt normalerweise nicht imstande ist, sich zu entfernen, während andere Objekte Referenzen auf dieses Objekt halten. Außerdem können Objekte nicht einfach von einem Computer zum anderen migrieren.

Eine Infrastruktur, die Agenten empfängt und ausführt und sich mit Sicherheitsfragen beschäftigt, ist erforderlich. Das Repository-Objekt RA stellt allen Agenten und allen Benutzern des Systems "White Page" and "Yellow Page" Funktionalitäten bereit. Das MOS kennt unterschiedliche Arten der Agentengruppierung und insbesondere die Methode der Holonisierung (Verschmelzung).

Jedes Softwareobjekt kann ein Teil von einem oder mehreren Holonen (Menge verschmolzener Softwareobjekte) Hᵢ mit gleichen Objektarten {A^{x}₁,..., A^{x}ₙ} oder unterschiedlichen Objektarten {A^{a}₁,...,A^{z}ₙ} sein. Das RA verwaltet die Referenzen auf alle Teile des PH-MOS RA_{Ref} := {Ref (Aᵢ) } ∪ {Ref (Hᵢ) } ∪ {Ref (AEᵢ) } ∪ {Ref (WSᵢ) }, wobei WSᵢ die Messgeräte sind, auf die die Objekte Zugriff haben.

Eine weitere Innovation ist die probabilistische holonische Objektarchitektur. Solch ein Objekt A = (F, S) hat eine neue probabilistische Wissensbasis (KB) mit zwei Bestandteilen: einer Komponente für Faktenwissen F und einer Komponente für strukturelles Wissen S. S: = {BHᵢ} ist eine Menge von Verhaltensnetzen BH, die als Tupel (B (D _{[t,l]}), D_{[t,l]}, D_{>l}, DK) definiert werden, wobei B(D_{[t,l]}) eine Menge von Bayes' schen Netzen darstellt, die auf den letzten Messungen der Objekte basieren. D_{[t,1]} entspricht den alten Sensordaten des Objekts (gespeichert in einem Datensatz), D_{>1} sind die gegenwärtigen Sensor-Daten des Objekts, die noch nicht in den Netzen integriert sind und DK ist das Domänenwissen, das in die Netze integriert worden ist.

Jeder Datensatz eines Verhaltensnetzes entspricht einem Zeitintervall [t, 1]. Folglich haben die Netze einen spezifischen Zeitzustand T_{BH} = {t, 1, k, b}, wobei t der Anfangspunkt des Wissenssammelns ist, 1 dem letzten Zeitpunkt entspricht, von dem sensorische Daten in dem Netzwerk enthalten sind, k der Anzahl der Messungen der Welt entspricht und b die Zeitbasis darstellt, d.h. den Zeitabschnitt zwischen den Messungen.

Um den Objekten ein tieferes Verständnis über die Informationen in den Netzen zu geben, erhalten die Knoten in einem Netzwerk eine Semantik. Ein Konzept der Welt W eines Objekts wird durch einen Knoten oder ein Teilnetzwerk von Knoten in einem Verhaltensnetz repräsentiert.

Um das Wissen über die Semantik eines Knotens Vᵢ vor der Verschmelzung zu behalten, kann jeder Knoten nach der Verschmelzung ein oder mehrere Referenzen Vᵢ ← {Ref (A₁) ,...,Ref (Aₙ)} auf die ursprünglichen Einzelobjekte haben. Zusätzlich kann ein Knoten Vᵢ ein Kennzeichen (Tag) *st*_{*i*} *∈ DK* haben, das die Semantik dieses einzelnen Knotens Vᵢ ← *st*_{*i*} angibt. Z.B. erhält ein Knoten mit dem Namen "AnzahlderVorkommen" eine semantische Bezeichnung mit der Bedeutung Einheiten.

Die Struktur eines Bayes' schen Netzes drückt nicht implizit kausale Abhängigkeiten aus, um ein Netz für den menschlichen Benutzer handhabbar zu machen, sollte dies aber ein Hauptziel in seiner Konstruktion sein. Eine andere Annahme ist, dass kausale Strukturen auch die Komplexität der Netze minimieren. Um die gewöhnliche Struktur eines Netzes während der Fusion aufrecht zu erhalten und die Komplexität so klein wie möglich zu halten, führt man eine andere Bezeichnung (Tag) ein, die die Kausalität eines Knotens Vᵢ ← *ct*_{*i*} *∈ DK* modelliert.

Jeder Knoten wird zu einem der folgenden Typen: {Inout, Input, Output, Normal}. Input-Knoten bedeutet, dass der Knoten ein Input-Knoten für ein Teilnetz ist und dass Knoten von anderen Teilnetzen sich zu einer eingehenden Kante verbinden können. Output-Knoten bedeutet, dass der Knoten vom gegenwärtigen Teilnetz ausgehende Kanten zu einem anderen haben kann. Inout bedeutet, dass dieser Knoten sowohl ein Input- als auch ein Output-Knoten ist. Normal-Knoten sind innere Knoten eines Sub-Netzes und besitzen nur Kanten zu und von Knoten innerhalb eines Teilnetzes, während Verbindungen zu anderen Teilnetzen nicht erlaubt sind.

Alle Kanten Eᵢ von G besitzen sich gegenseitig ausschließende Kantentypen ET ⊆ DK, die definieren, ob es sich um *vorgeschlagene, verbotene* oder eine *zwingende* Kante handelt. Diese Kantentypen werden benutzt, um das partielle Domänenwissen des Benutzers zu modellieren. Falls ein Benutzer eine Beziehung zwischen zwei Knoten vermutet, aber diesbezüglich nicht zu 100% sicher ist, kann er eine vorgeschlagene Kante einsetzen. Vorgeschlagene Kanten werden mit dem MDL-Wert überprüft und nur eingesetzt, wenn sich die Gesamtbewertung des Netzes erhöht. Verbotene Kanten werden benutzt, um den Suchraum des Algorithmus zum Strukturlernen einzuschränken und offensichtlich falsche Kanten zu verbieten. Zwingende Kanten werden in jedem Fall eingesetzt, selbst wenn die Gesamtbewertung sich verringert. Zusätzlich zu den Kantentypen kann der Benutzer spezifizieren, ob eine Kante gerichtet oder ungerichtet ist. Da ein Bayes'sches Netz nur gerichtete Kanten erlaubt, werden die nichtgerichteten Kanten ebenfalls mit dem MDL-Wert getestet, um eine Entscheidung zu treffen, welche Richtung ein akkurateres Netzwerk ergibt.

Mit dieser Art von Verhaltennetzen ist man in der Lage, hierarchische Netze mit Zeitabhängigkeiten und Semantik zu modellieren. Angenommen, dass man eine Menge von Objekten (MOS) hat, die an einem Problem zusammenarbeiten, dann kann in vielen Fällen nur eine Lösung gefunden werden, wenn die Objekte ihr vollständiges Wissen miteinander teilen. Bei der Verwendung traditioneller Kommunikationsprotokolle ist dieser Prozess außerordentlich ineffizient.

Um dieses Problem zu lösen, verwendet man das Konzept der Holonisierung, bei dem die Objekte dazu in der Lage sind, sich zu einem so genannten Holon zu gruppieren. Ein Holon ist ein spezielles Gruppen-Objekt, das sich dadurch charakterisiert, dass die sich daran beteiligenden Objekte zum Teil ihre Autonomie aufgegeben haben und sich zur Verfolgung eines gemeinsamen Ziels verpflichten. Eines der Mitglieder des Holons oder ein neues Objekt wird der "Leiter" des Holons und ist als einziges Objekt des Holons für die Außenwelt sichtbar.

Im Folgenden wird ein Verfahren beschrieben, bei dem die Mitglieder des Holons Teile ihres Wissens einem "Klon" abgeben, der das Wissen der Objekte fusioniert und es in seine Wissensbasis integriert. Wie schon oben beschrieben bestehen die Wissensbasen der probabilistischen Objekte aus Mengen von Verhaltensnetzen.

Da die Komplexität auf eine Vielzahl von kleinen Netzen heruntergebrochen worden ist, sind viele probabilistische Abhängigkeiten zwischen den Entitäten, die im Makronetz enthalten waren, verloren gegangen. Zwischen den meisten Entitäten bestehen Abhängigkeiten, die für den Simulationsprozess relativ irrelevant sind, da sie sich gegenseitig in ihrem Verhalten nur minimal beeinflussen und diese Einflüsse somit zu keinen wesentlichen Effekten führen, da sie durch die Einflüsse anderer Entitäten neutralisiert werden. Zwischen manchen Entitäten gibt es aber simulationsrelevante Abhängigkeiten bzw. signifikante Korrelationen. Um diese in der Simulation berücksichtigen zu können, benötigt man ein Verschmelzungsverfahren (s. Methode B).

### Methode B: Verschmelzung der Entitäten:

Für in ihrem Verhalten korrelierende Entitäten kann man die Verhaltensnetze dieser Entitäten in einem Bottom-up Ansatz wiederum zu einem größeren Netz (Meta-Netz) verschmelzen und dieses in einem übergeordneten Objekt kapseln, welches die Menge der korrelierenden Entitäten repräsentiert. Ein gleiches Prinzip kann man anwenden, um Aussagen über Gruppen von Entitäten zu generieren, die nicht notwendigerweise miteinander korrelieren. Auf diese Weise erhöht man die Komplexität des Mikrosimulationsansatzes zwar, jedoch bleibt man deutlich unter der Komplexität für das Makronetz, da man durch Methode A für jede Simulation immer nur die einzelnen Objekte mit ihren Mikronetzen und die Gruppen- bzw. Meta-Objekte mit ihren Meta-Netzen befragen, die für die Fragestellung der Simulation absolut notwendig sind.

### Methode zum Verschmelzen probabilistischer Objekte:

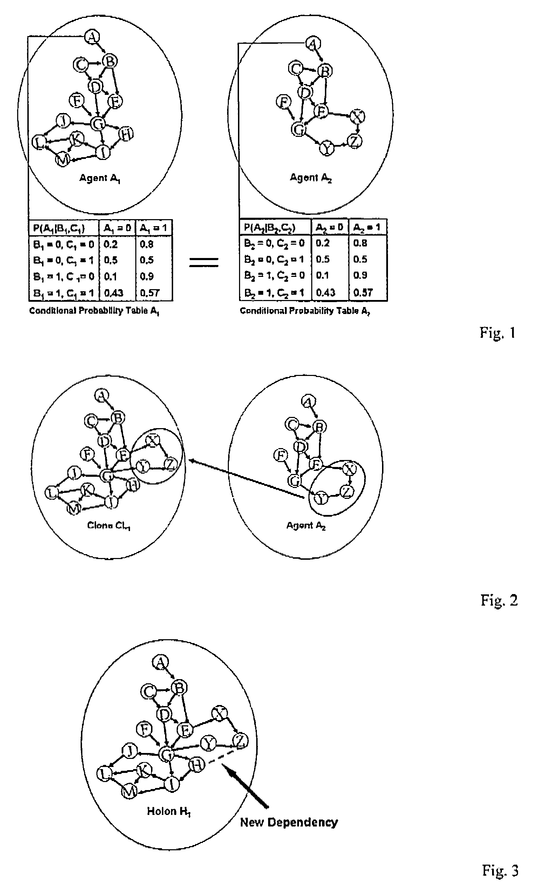

Das Finden maximaler gleicher Teilnetze wird in Fig. 1 gezeigt.

In Fig. 1 sieht man zwei Software-Objekte mit probabilistischen Netzwerken, die in ein holonisches Softwareobjekt verschmolzen werden sollen. Zunächst müssen alle maximalen gleichen Teilnetze gefunden werden, da diese Teile nicht verschmolzen werden müssen. Gleiche Knoten kommen relativ häufig vor, wie z.B. die Zeitknoten Tag, Wochentag, Monat etc. Die Information, welche Knoten identisch sind, wird ebenfalls benötigt, um zu wissen wo ungleiche Knoten angeknüpft werden müssen. Wenn keine Knoten gleich sind, werden die beiden Netze als getrennte Teilnetze abgespeichert. In späteren Verarbeitungsschritten können allerdings neue Kanten zwischen den beiden Teilnetzen hinzugefügt werden, wodurch ein einzelnes Gesamtnetz resultieren kann.

Um alle maximal gleichen Sub-Netze zu finden, nimmt man alle Wurzelknoten und vergleicht sie miteinander. Zwei Knoten Vᵢ, Vⱼ sind gleich, wenn deren bedingte Wahrscheinlichkeitstabellen (CPT) und die Elternknoten Pa(Vᵢ) = Pa(Vⱼ) gleich sind. Das bedeutet, dass alle möglichen Pfade (Vᵢ → Vᵢ₊₁ → ... → Vₙ = Wurzel-Knoten) zu Wurzel-Knoten gleich sein müssen. Der Grund hierfür ist, dass sich ändernde Wahrscheinlichkeitsverteilungen (CPT) von Pa(Vᵢ) und Pa(Vⱼ) nach durchgeführten Inferenzen zu unterschiedlichen CPT von Vᵢ und Vⱼ führen können.

Falls zwei Wurzelknoten mit gleichen CPTs gefunden werden, fährt der Algorithmus rekursiv mit den Kindknoten des gleichen Knotens fort. Dieses Verfahren wird für alle gleichen Wurzelknoten und alle bislang unbesuchten Knoten wiederholt. Man verwendet verschiedene Farben für die Knoten, um zu kennzeichnen, welche Knoten bereits besucht wurden, welche noch unbesucht sind und welche gleich sind.

Der binäre Operator == ist wahr genau dann, wenn die CPT zweier Knoten gleich sind. Der Operator testet nicht die volle Gleichheit von BN-Knoten, wie oben definiert.

Nach dem ersten Lauf der Schleife in FindeMaximaleGleicheNetze(G_{B}) (siehe Fig. 8) stellen alle genommenen Knoten ein maximales gleiches Sub-Netz dar. Alle Netze, die nach n Durchläufen gefunden wurden, werden per Definition zerlegt.

Nachdem gleiche Wurzelknoten durch das Verfahren in Fig. 8 gefunden sind, wird die Methode FindeGleicheKinderKnotenAusgehendVonElternKnoten() (Fig. 9) aufgerufen, um alle Kindknoten zu prüfen. Kindknoten sind gleich, wenn ihre CPT und alle möglichen Wege zu Wurzelknoten gleich sind (AllePfadeZuWurzelGleich(gleicheKnoten)). Wenn gleiche Knoten gefunden werden, wird die Methode wieder für alle Kindknoten aufgerufen:
Die Boole'sche Funktion AllePfadeZuWurzelGleich() prüft die Gleichheit für alle Knoten auf Pfaden zu Wurzelknoten. Falls gleiche Elternknoten gefunden werden, wird die Methode FindeGleicheKinderKnotenAusgehendVonKind() aufgerufen, um auch alle gleichen Kindknoten dieses Eltern-Knotens zu finden. FindeGleicheKinderKnotenAusgehendVonKindKnoten() ist der Methode FindeGleicheKinderKnotenAusgehendVonElternKnoten() ähnlich, außer dass man prüfen muss, ob ein Kindknoten vorher besucht wurde, weil man von einem Kinder-Knoten kommt und man keine Zyklen durchlaufen möchte.

### Das Verschmelzen von probabilistischen Netzwerken:

Nach der Identifizierung aller maximal gleichen Teilnetze und damit allen gleichen Knoten V_{E} = {V₁, ..., Vᵢ₋₁} kann man die ungleichen Teile des Netzwerks V_{UE =} {Vᵢ,...,Vₙ} des Objekts A₂ identifizieren (s. Fig. 2). Bevor diese Teile mit dem Netzwerk G₁ von Objekt A₁ verbunden werden, wird ein Klon CL₁ von A₁ produziert.

Für alle V_{UE} in A₂ werden Kopien im Netzwerk von CL₁ kreiert. Dann werden Kopien aller Kanten zwischen V_{UE} zwischen den neuen Knoten in CL₁ hinzugefügt. Diese Kanten weisen immer von V_{E} nach V_{UE}. Falls die Richtung umgekehrt wäre, dann würden die Knoten von V_{UE} Eltern von V_{E} sein. Aber gemäß der Definition der Gleichheit von Teilnetzen müssen alle Eltern von V_{E} auch in V_{E} sein. Nach dem Verschmelzungsprozess muss keine CPT aktualisiert oder neu gelernt werden. Alle Knoten in V_{E} sind unbeeinflusst, weil keine neuen Kanten auf Knoten in V_{E} weisen. Die CPTs von V_{UE} müssen auch nicht aktualisiert werden, da keine neuen Kanten zu Knoten in V_{UE} hinzugefügt werden.

Im nächsten Schritt verschmelzt man die Roh-Sensor-Daten der Vergangenheit D_{[t,l]} des Objekts mit den aktuell noch nicht integrierten Sensor Daten D>1.

Die Verschmelzung von Datensätzen ist relativ einfach, da alle Knoten von B als Spalten in D repräsentiert werden. Die Datensätze werden verschmolzen, indem die Spalten der ungleichen Knoten in D₂ ∈ A₂ zu den entsprechenden Datensätzen in CL₁ hinzugefügt werden.

Es ist möglich, dass keine gleichen Knoten gefunden werden. Dann wird das Netzwerk von A₂ zu CL₁ als ein isoliertes Teilnetz hinzugefügt. Im nächsten Schritt des Holonisierungs-Verfahrens können neue Relationen entdeckt und neue Kanten eingefügt werden.

### Entdecken und Integrieren von Abhängigkeiten:

Im nächsten Schritt wird eine Suche nach Abhängigkeiten zwischen den verschmolzenen Software-Objekten gestartet. Startpunkt ist dabei eine Kreuzvalidierung zwischen dem alten und dem neuen Teil des Netzwerkes. Für alle möglichen Kanten zwischen Output-Knoten und InOut-Knoten bzw. Input-Knoten und InOut-Knoten, welche zwischen den holonischen Teilnetzen liegen, wird das Mutual-Gewicht berechnet, falls die Kante nicht durch eine verbotene Kante ausgeschlossen wurde. Beginnend mit der Kante mit dem größten Gewicht werden alle Kanten nacheinander in CL₁ eingefügt. Nach dem Einfügen einer Kante muss die CPT des Endknotens neu berechnet werden. Wenn sich der MDL-Wert durch die Hinzunahme der Kante erhöht, wird die Kante beibehalten, andernfalls verworfen.

Durch das Verfahren gemäß Fig. 7, entstehen aus zwei Softwareobjekten ein Holon, der mehr Wissen besitzt, als die Summe der beiden Ursprungsobjekte und dessen Struktur für viele Aufgaben effizienter ist, als die der Einzelobjekte. Holone existieren im Allgemeinen nur temporär bis das zugrunde liegende Ziel erreicht wurde und anzunehmen ist, dass in Kürze keine weitere Verwendung sinnvoll ist. Die Fig. 3 zeigt entsprechende abgeleitete Abhängigkeiten.

### Methode C: Der Simulationsprozess:

Um die Berechnungskomplexität weiter zu verringern, kann man die Objekte und die Gruppenobjekte sequentiell befragen bzw. ihr Verhalten aus den in ihnen gekapselten Netzen berechnen lassen, da Korrelationen ja in den Meta-Netzen gespeichert sind und so Korrelationen zwischen den Software-Objekten bzw. den Entitäten nicht zur Laufzeit der Simulation berechnet werden müssen. Zudem müssen nicht alle Software-Objekte mit ihren Mikro- und Makro-Netzen zur gleichen Zeit im Speicher des Computers gehalten werden, was das System skalierbar macht.

Im ersten Schritt benötigt das System ein Startszenario, in dem die Rahmenbedingungen definiert sind, auf deren Basis der erste Simulationsdurchlauf abläuft. Ein Startszenario besteht aus der Beschreibung der heutigen Situation, den Annahmen über zukünftige externe Einflüsse, der Definition der Ziele sowie den geplanten Maßnahmen und Aktionen.

Zur Generierung des Startszenarios wird ein so genanntes Szenario-Objekt erstellt, in welchem alle nötigen Simulationsparameter gespeichert werden. Konkret werden hier alle Veränderungen und Aktionen durch spezielle Aktionsobjekte verwaltet. Ebenso werden hier Annahmen über zukünftige externe (Umwelt-)Einflüsse zur eigentlichen Simulation vorgemerkt.

Zusätzlich können Angaben über den Simulationszeitraum und die zu berechnenden Kennzahlen zur Evaluation spezifiziert werden.

Auf der Basis des Startszenarios wird durch Simulation eine Prognose über die Auswirkungen der Szenarien erstellt. Üblicherweise wird die Prognose mittels weiterer Simulationsdurchläufe mit veränderten Werten wiederholt, um alle definierten Szenariovariationen evaluieren zu können.

Die eigentliche Simulation und Prognose besteht darin, dass man den Software-Objekten die aktuelle Szenariovariation, also zu Beginn das Startszenario, präsentiert und sie nach ihren individuellen Verhaltensmustern reagieren lässt. Alle Software-Objekte reagieren gemäß ihres in den Verhaltens- bzw. Eigenschaftsnetzen kodierten Wissens auf die im Szenario definierten Maßnahmen und äußeren Einflüsse.

Während der Simulation werden die Abhängigkeitsnetze der Entitäten entsprechend den Simulationsparametern verschmolzen, konfiguriert und die Änderungen über das Netz propagiert. Dabei müssen für viele Simulationsziele Abfolgen von Netzkonfigurationen generiert werden, die dann nacheinander ausgewertet werden. Eine Netzkonfiguration besteht dabei aus einer Folge von Evidenzen und Likelihoods (Wahrscheinlichkeitsverteilungen), die eine bestimmte Situation beschreiben. Diese Evidenzen und Likelihoods werden im Netz gesetzt und anschließend darüber propagiert. Die Ergebnisse werden vom Software-Objekt interpretiert und in eine aussagekräftige Kennzahl umgewandelt. Diese Kennzahlen können zu einer globalen Kennzahl zusammengefasst werden.

### Methode D: Generierung der probabilistischen Netze:

In der Regel gibt es eine optimale Menge an Kanten und Knoten in einem probabilistischen Netz, bei dem eine sehr gute Prognosegüte bei einer vertretbaren Berechnungskomplexität erzielt wird. Nimmt man Kanten oder Knoten weg, so verringert sich die Prognosegüte signifikant. Nimmt man Knoten oder Kanten hinzu, steigt die Prognosegüte hingegen nicht signifikant, wohingegen sich die Berechnungskomplexität aber signifikant verschlechtert. Um optimale Netze zu erzeugen, wird die folgende Methode verwendet:
Lernen Bayes'scher Netze

Das Problem des Erlernens eines Bayes'schen Netzes kann folgendermaßen definiert werden: Bei gegebener Trainingsmenge D als Beispiel einer Instanz von W soll ein Netz B = (G, PD) gefunden werden, das D am besten entspricht. Um solch ein Netzwerk zu finden, benötigt man drei Dinge: erstens eine Bewertungsfunktion, die die Qualität eines Netzes in Bezug auf den gegebenen Datensatz D misst, zweitens einen heuristischen Suchalgorithmus, der den Raum der möglichen Netze (mit ihren unterschiedlichen Topologien und Wahrscheinlichkeitsverteilungen) durchläuft und vorzugsweise die beste globale Lösung angibt und drittens eine Methode zum Erlernen der Wahrscheinlichkeiten in der Menge von bedingten Wahrscheinlichkeitstabellen CPT.

Das Erlernen Bayes'scher Netze ist ein NP-vollständiges Problem; sogar wenn vollständige Daten vorliegen. Zur Qualitätsbewertung der Netze wird bevorzugt die so genannte MDL-Bewertungsfunktion (MDL von ,,Minimum Description Length" bzw. Minimale Beschreibungslänge) verwendet.

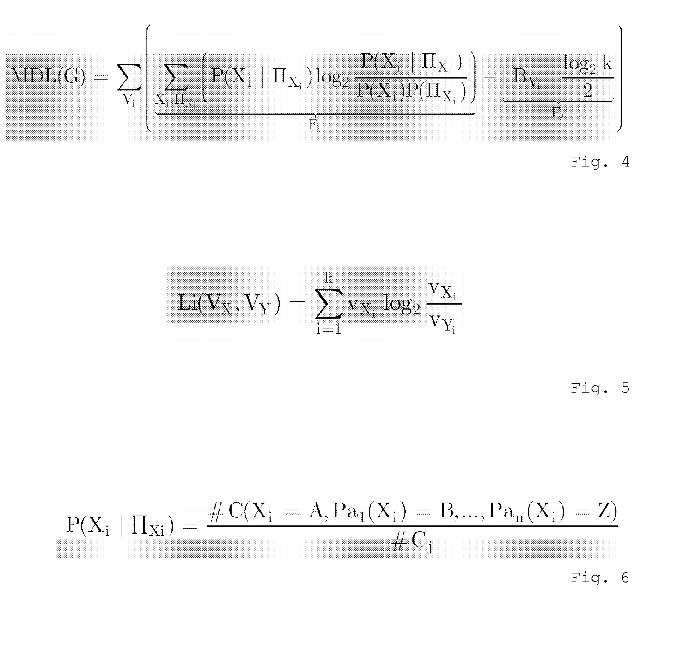

Die MDL-Bewertungsfunktion (siehe Fig. 4) hat ihre Wurzeln in der Universal-Codierung. Das Ziel der Universal-Codierung ist, ein Modell M von D zu finden, das verwendet werden kann, um eine kompakte Version von D zu produzieren. Die Gesamtbeschreibungslänge ist die Größe der komprimierten Version von D. Die MDL-Bewertungsfunktion minimiert die Gesamtbeschreibungslänge von M. Im Bereich der Bayes'schen Netze balanciert die MDL-Funktion die Komplexität eines Netzes mit der Akkuratheit der Darstellung von D in einem Netz B aus. |Bvi| ist die Summe der Anzahl der Wahrscheinlichkeiten der CPT der Vᵢ's und k ist die Anzahl der Datensätze in D. Der erste Teil F₁ der Formel maximiert die Akkuratheit des Netzes, während der zweite Teil F₂ ein "Strafwert" ist, der übergroße und dazu "übertrainierte" Netze verhindert.

Wie oben erwähnt, benötigt man auch einen heuristischen Suchalgorithmus, um den Lernalgorithmus zum Generieren der Bayes'schen Netzstruktur zu vervollständigen. Um gute Netzstrukturen zu finden, beginnt man zuerst mit einem Kreuzvalidierungsverfahren. Für jedes mögliche Paar (Vₓ, Vy) berechnet man die logarithmische Wahrscheinlichkeit (mutual weight), nach der Formel in Fig. 5, und speichert sie in einer Liste. Die logarithmische Wahrscheinlichkeit ähnelt der MDL-Bewertungsfunktion, kann aber im Gegensatz dazu direkt aus dem Datensatz D ohne Netz B direkt berechnet werden. Dann wird die logarithmische Wahrscheinlichkeitsliste anhand des höchsten Wertes absteigend sortiert. Nun beginnt man eine sog. "Greedy"-Suche. Man nimmt den ersten Eintrag in der logarithmischen Wahrscheinlichkeitsliste, fügt eine Kante zwischen die zwei Knoten hinzu und berechnen den MDL-Wert. Dann wird die Richtung der Kante herumgedreht. Wenn eine der Richtungen den gesamten MDL-Wert des Netzes erhöht, wird die Kante mit dem höheren Wert genommen. Dieses Verfahren wird für alle Knotenpaare in der Liste wiederholt.

Schließlich benötigt man eine Funktion zum Erlernen der Wahrscheinlichkeit P (X₁, ..., Xₙ) eines Ereignisses Cᵢ von D, um die CPT des Netzwerkes zu füllen. Im Fall vollständiger Daten ist dies sehr einfach. Die Wahrscheinlichkeit

P (Xᵢ = A | Pa₁ (Xᵢ) = B,...,Paₙ(Xᵢ) = Z) wird mit der Formel in Fig. 6 berechnet.

Welches der Anzahl der Zustandskombinationen der Einflussfaktoren entspricht, bei denen Xᵢ = A gilt und die Eltern von Xᵢ Pa₁ = B,..., Paₙ - Z sind, dividiert durch die Gesamtzahl aller möglichen Zustandskombinationen der Einflussfaktoren in D.

Das resultierende BN modelliert die Erfahrung und das Wissen eines probabilistischen Objekts betreffend seiner Sensordaten während des Zeitintervalls [t, 1].

Die hierin beschriebenen Ausführungsformen stellen keine Beschränkung des Schutzumfanges dar, sie dienen vielmehr der Klarstellung und dem besseren Verständnis. Der Schutzumfang wird durch die folgenden Ansprüche bestimmt und bemisst sich am Wissen des Fachmanns auf diesem Gebiet.

### Referenzen

Die folgenden Referenzen sind Teil der Anmeldung und werden mit der folgenden Auflistung hierin integriert.
[CDS99] Robert G. Cowell, A. Philip Dawid, David J. Spiegelhalter. Probabilistic Networks and Expert Systems. Springer Verlag 1999.
[Che02] Cheng, J., Hatzis, C., Hayashi, H., Krogel, M., Morishita, S., Page, D. and Sese, J., KDD Cup 2001 Report. ACM SIGKDD Explorations Volume3, Issue 2, January 2002.
[GSV99] C. Gerber, J. Siekmann and G. Vierke. Holonic MultiAgent Systems. Technical Report, Deutsches Forschungszentrum für Künstliche Intelligenz, Journal of Artificial Intelligence 1999.
[jen01] F. V. Jensen. Bayesian Networks and Decision Graphs. Springer Verlag 2001.
[Nea98] R. E. Neapolitan. Probabilistic Reasoning in Expert Systems: Theory and Algorithms. A Wiley-Interscience Publication. John Wiley & Sons, Inc., New York. 1998.
[Pea88] Judea Pearl. Probabilistic Reasoning in Intelligent Systems. Morgan Kaufmann Publishers INC. 1988.
[FSS03] Fischer, K., Schillo, M., and Siekmann, J.: Holonic Multiagent Systems: The Foundation for the Organization of Multiagent Systems. Proceedings of the First International Conference on Applications of Holonic and Multiagent Systems (HoloMAS'03).
[Chi96] D. Chickering, Learning Bayesian networks is NP-Complete, In Learning from Data, 121-130, Springer-Verlag, 1996.
[CGH94] D.M. Chickering, D. Geiger, D. Heckerman, Learning Bayesian networks is NP-hard, Technical Report MSR-TR-94-17, Microsoft Research, Microsoft Corporation, 1994.

## Patentansprüche

1. Computersystem mit Speicher und Prozessor zur Simulation des Verhaltens von beliebigen Entitäten, deren Interdependenzen sowie eines daraus emergierenden Systemverhaltens auf der Basis von Sensordaten, umfassend:
- einen Speicherbereich mit mindestens einem individuellen Software-Objekt, das eine oder mehrere reale Entitäten repräsentiert und welches das individuelle Verhalten der entsprechenden Entität(en) mittels einer Menge von probabilistischen Netzen (PN) speichert, wobei ein PN ein Teilverhalten der Entität(en) als quantifizierte, lineare oder nicht-lineare Abhängigkeiten zwischen einer Menge von Einflussfaktoren und Verhaltensaspekten modelliert,
wobei die Einflussfaktoren und Verhaltensaspekte durch entsprechende Knoten in den PN repräsentiert sind, wobei das individuelle Verhalten mittels maschineller Lernverfahren aus realen Daten über die Entität(en) und deren Umwelt extrahiert ist,
- einen Speicherbereich mit mindestens einem Meta-PN, das die Abhängigkeiten zwischen den Entitäten repräsentiert, wobei diese aus realen Daten extrahiert sind und als lineare oder nicht-lineare Abhängigkeiten zwischen den Entitäten im Meta-PN gespeichert sind, wobei die Meta-PN durch Verschmelzen von lokalen PN und dem Hinzufügen von extrahierten globalen Interdependenzen generiert sind,
- einen Speicherbereich in dem beliebige Szenarien anhand von Kombinationen von konkreten Zuständen der Einflussfaktoren definiert sind, wobei ein über einen Zeitraum definiertes Szenario durch eine Sequenz von Kombinationen von konkreten Zuständen der Einflussfaktoren dargestellt wird, die Simulation des Szenarios durch die Konfiguration der PN anhand der Zustandskombinationen initialisiert wird, wobei in den entsprechenden Knoten der Einflussfaktoren die im Szenario definierten Zustände eingestellt werden,
wobei das Verhalten der Entitäten durch InferenzAlgorithmen der PN anhand der sich eingestellten Zustände der Verhaltensaspektknoten ermittelt wird, wobei Mittel vorhanden sind, um die globalen Interdependenzen zwischen den Entitäten mit den Meta-PN analog zu den lokalen PN zu simulieren.

2. Das Computersystem nach Anspruch 1, wobei die globalen Interdependenzen zwischen den Entitäten in übergeordneten Einheiten gespeichert sind und die übergeordneten Einheiten eine Menge von Entitäten repräsentieren.

3. Das Computersystem nach Anspruch 1 oder 2, wobei die
Software-Objekte ein oder mehrere der folgenden Eigenschaften aufweisen: autonom, reaktiv, pro-aktiv, mobil, lernfähig, kommunikativ kooperativ,
wobei autonom bedeutet, dass ein Software-Objekt die Fähigkeit besitzt, zu jedem von ihm gewählten Zeitpunkt eine Aktion durchzuführen (unabhängig von anderen Programminstanzen),
reaktiv bedeutet, dass ein Software-Objekt in der Lage ist, in Echtzeit auf externe Anfragen oder plötzlich eintretende Ereignisse zu reagieren,
pro-aktiv bedeutet, dass ein Software-Objekt ohne Anstoß von außerhalb Berechnungen durchführen und Handlungen einleiten kann,
mobil bedeutet, dass sich ein Software-Objekt bei Bedarf von einem Rechner auf einen anderen Rechner verschieben kann,
lernfähig bedeutet, dass die Software-Objekte keinen festen Programmablauf oder feste Datenbasis haben, sondern sich an neue Anforderungen anpassen können indem neue Informationen und Verhalten gelernt werden,
kommunikativ bedeutet, dass die Software-Objekte untereinander Informationen und Anweisungen austauschen können,
kooperativ bedeutet, dass die Software-Objekte auf das Verhalten von anderen Software-Objekten reagieren, um gemeinsame übergeordnete Ziele zu erreichen.

4. Das System nach einem oder mehreren der Ansprüche 1 bis 3, wobei
das Gesamtverhalten aller Entitäten durch Zusammenfassen der einzelnen Simulationsergebnisse der Entitäten simuliert wird.

5. Das System nach einem oder mehreren der Ansprüche 1 bis 4, wobei die Modellierung und die Simulation skalierbar ist, indem beliebige Gruppen von Entitäten zu übergeordneten Einheiten zusammengefasst werden, und wobei übergeordnete Einheiten wiederum zu Einheiten zusammengefasst werden können (Fraktalbildung).

6. Das System nach einem oder mehreren der Ansprüche 1 bis 5, wobei Mittel vorhanden sind, die Simulationsergebnisse, welche das Gesamtverhalten der simulierten Entitäten bzw. deren Reaktionen auf Szenario-Änderungen repräsentieren, durch eine Nutzenfunktion zu bewerten.

7. Das System nach dem Anspruch 6, wobei Mittel vorhanden sind, die mittels eines Optimierungsverfahrens nach Szenarien, d.h. Zustandskombinationen von Einflussfaktoren, suchen, die die Nutzenfunktion maximieren,

8. Das System nach dem Anspruch 7, wobei Mittel vorhanden sind, die zu einem bestimmten Zeitpunkt das Optimierungsverfahren abbrechen und eine Liste der bis zu diesem Zeitpunkt gefundenen Szenarien ausgeben, die die Nutzenfunktion maximieren.

9. Das System nach dem Anspruch 8, wobei Mittel vorhanden sind, die eines der ausgegebenen Szenarien auswählen, um durch das Ergreifen von Maßnahmen, die Bewirkung physikalischer Effekte oder die Steuerung physikalischer Einrichtungen die Einflussfaktoren auf die physikalischen Instanzen der Entitäten in der realen Welt in gleicher Weise zu parametrisieren, wie dies im ausgegebenen Szenario spezifiziert ist
oder
durch das Ergreifen von Maßnahmen, die Bewirkung physikalischer Effekte oder die Steuerung physikalischer Einrichtungen eine Anpassung an das erwartete Gesamtverhalten der simulierten Entitäten erfolgt.

10. Verfahren, das zur Modellierung und Simulation von Entitäten, deren Interdependenzen sowie eines daraus emergierenden Systemverhaltens genutzt werden kann, um Aussagen über das reale Verhalten der Entitäten und des Systems zu treffen, umfassend die folgenden Schritte:
- die realen Entitäten werden durch individuelle Software-Objekte repräsentiert, wobei ein solches Software-Objekt eine oder mehrere reale Entitäten repräsentiert und das individuelle Verhalten der entsprechenden Entität(en) speichert, wobei das individuelle Verhalten mittels maschineller Lernverfahren aus realen Daten über die Entität(en) und deren Umwelt extrahiert wird, um dann das individuelle Verhalten innerhalb des Software-Objektes mittels einer Menge von probabilistischen Netzen (PN) zu speichern, wobei ein PN je ein Teilverhalten der Entität(en) als quantifizierte lineare oder nicht-lineare Abhängigkeiten zwischen einer Menge von Einflussfaktoren und Verhaltensaspekten modelliert,
- die Einflussfaktoren und Verhaltensaspekte sind durch entsprechende Knoten in den PN repräsentiert,
- die globalen Interdependenzen zwischen den Entitäten werden aus realen Daten extrahiert und als lineare oder nicht-lineare Abhängigkeiten zwischen den Entitäten in Meta-PN gespeichert,
- die Meta-PN werden durch Verschmelzen von lokalen PN und dem Hinzufügen von extrahierten globalen Interdependenzen generiert,
- es werden beliebige Szenarien anhand von Kombinationen von konkreten Zuständen der Einflussfaktoren definiert, es wird ein über einen Zeitraum definiertes Szenario durch eine Sequenz von Kombinationen von konkreten Zuständen der Einflussfaktoren dargestellt,
- die Simulation des Szenarios wird durch die Konfiguration der PN anhand der Zustandskombinationen initialisiert, wobei in den entsprechenden Knoten der Einflussfaktoren die im Szenario definierten Zustände eingestellt werden,
- das Verhaltens der Entitäten durch InferenzAlgorithmen der PN anhand der sich eingestellten Zustände der Verhaltensaspektknoten ermittelt, wobei die globalen Interdependenzen zwischen den Entitäten mit den Meta-PN analog zu den lokalen PN simuliert werden.

11. Das Verfahren nach Anspruch 10, wobei die globalen Interdependenzen zwischen den Entitäten in übergeordneten Einheiten gespeichert werden und wobei die übergeordneten Einheiten eine Menge von Entitäten repräsentieren.

12. Das Verfahren nach Anspruch 10 oder 11, wobei
die Software-Objekte eine oder mehrere der folgenden Eigenschaften aufweisen: autonom, reaktiv, pro-aktiv, mobil, lernfähig, kommunikativ kooperativ, wobei
autonom bedeutet, dass ein Software-Objekt die Fähigkeit besitzt, zu jedem von ihm gewählten Zeitpunkt eine Aktion durchzuführen (unabhängig von anderen Programminstanzen),
reaktiv bedeutet, dass ein Software-Objekt in der Lage ist, in Echtzeit auf externe Anfragen oder plötzlich eintretende Ereignisse zu reagieren,
pro-aktiv bedeutet, dass ein Software-Objekt ohne Anstoß von außerhalb Berechnungen durchführen und Handlungen einleiten kann,
mobil bedeutet, dass sich ein Software-Objekt bei Bedarf von einem Rechner auf einen anderen Rechner verschieben kann,
lernfähig bedeutet, dass die Software-Objekte keinen festen Programmablauf oder feste Datenbasis haben, sondern sich an neue Anforderungen anpassen können, indem neue Informationen und Verhalten gelernt werden,
kommunikativ bedeutet, dass die Software-Objekte untereinander Informationen und Anweisungen austauschen können,
kooperativ bedeutet, dass die Software-Objekte auf das Verhalten von anderen Software-Objekten reagieren, um gemeinsame übergeordnete Ziele zu erreichen.

13. Das Verfahren nach einem oder mehreren der Ansprüche 10 bis 12, wobei das Gesamtverhalten aller Entitäten durch Zusammenfassen der einzelnen Simulationsergebnisse der Entitäten simuliert wird.

14. Das Verfahren nach einem oder mehreren der Ansprüche 10 bis 13, wobei die Modellierung und die Simulation skalierbar ist, indem beliebige Gruppen von Entitäten zu übergeordneten Einheiten zusammengefasst werden.

15. Das Verfahren nach einem oder mehreren der Ansprüche 10 bis 14, wobei übergeordnete Einheiten wiederum zu Einheiten zusammengefasst werden (Fraktalbildung).

16. Das Verfahren nach einem oder mehreren der Ansprüche 10 bis 15, wobei die Simulationsergebnisse, d.h. das Gesamtverhalten der simulierten Entitäten bzw. deren Reaktionen auf Szenario-Änderungen, durch eine Nutzenfunktion bewertet werden, um dann mittels eines Optimierungsverfahrens nach Szenarien, d.h. Zustandskombinationen von Einflussfaktoren, zu suchen, die die Nutzenfunktion maximieren.

17. Das Verfahren nach dem Anspruch 16, wobei zu einem bestimmten Zeitpunkt das Optimierungsverfahren abbricht und eine Liste der bis zu diesem Zeitpunkt gefundenen Szenarien ausgibt, die die Nutzenfunktion maximieren, um dann durch Auswahl eines der ausgegebenen Szenarien zum Ergreifen von Maßnahmen, die Bewirkung physikalischer Effekte oder die Steuerung physikalischer Einrichtungen die Einflussfaktoren auf die physikalischen Instanzen der Entitäten in der realen Welt in gleicher Weise zu parametrisieren, wie dies im ausgegebenen Szenario spezifiziert ist
oder
durch das Ergreifen von Maßnahmen, die Bewirkung physikalischer Effekte oder die Steuerung physikalischer Einrichtungen eine Anpassung an das erwartete Gesamtverhalten der simulierten Entitäten erfolgt.

18. Datenträger, umfassend eine digitale Datenstruktur, die nach dem Laden in einen Computerspeicher ein Verfahren nach einem oder mehreren der vorhergehenden Verfahrensansprüche ausführt.
